# EUROPEAN PATENT SPECIFICATION

(11) **EP 1 327 372 B1**
(45) Date of publication and mention of the grant of the patent: **11.08.2010**
(21) Application number: 01972897.1
(22) Date of filing: 08.10.2001
(51) Int. Cl.: H04W 76/02, H04W 80/10

(54) **A METHOD AND A SYSTEM FOR SIGNALLING BETWEEN A DIGITAL MOBILE COMMUNICATION SYSTEM AND A DATA COMMUNICATION NETWORK**
VERFAHREN UND SYSTEM ZUR SIGNALISIERUNG ZWISCHEN EINEM DIGITALEN MOBILKOMMUNIKATIONSSYSTEM UND EINEM DATENKOMMUNIKATIONSNETZ
PROCEDE ET SYSTEME DE SIGNALISATION ENTRE UN SYSTEME DE COMMUNICATION MOBILE NUMERIQUE ET UN RESEAU DE COMMUNICATION DE DONNEES

(30) Priority: 12.10.2000 SE 0003691
(43) Date of publication of application: 16.07.2003
(73) Proprietor: TELIASONERA AB, 106 63 Stockholm (SE)
(72) Inventor: EKSTRÖM, Roger, S-123 72 Farsta (SE); AHLIN, Joachim, S-146 45 Tullinge (SE)
(74) Representative: Hopfgarten, Nils
(86) International application number: PCT/SE2001/002174
(87) International publication number: WO 2002/032180

(56) References cited:
- WO-A1-00/36856
- WO-A1-00/56112
- WO-A1-00/65802
- WO-A1-99/14910
- WO-A1-99/23838
- WO-A1-99/33226
- SCHULZRINNE H., ROSENBERG J.: 'The session initiation protocol: internet-centric signaling' October 2000, pages 134 - 141, XP000969736
- ZEPF J., RUFA G.: 'Congestion and flow control in signaling system No. 7 - Impacts of intelligent networks and new services' April 1994, pages 501 - 509, XP000458695

## Description

### TECHNICAL AREA

The present invention concerns methods and systems for managing services in telecommunication and data communication networks. The invention concerns in particular connection of services.

### INTRODUCTION

Users of mobile terminals desire in many cases to have access to a wide and varied range of services: everything from apparently simple services such as forwarding and voice mail to more advanced services such as, for example, Internet access. These services may be directly accessible in the mobile network to which the user is connected, or in other networks that are connected to the mobile network in which the user is located.

Furthermore, a situation that often occurs is that the user is connected to one network that the user only visits temporarily, that is, the user is in what is known as "roaming" mode.

It is true that these desires are met within the framework of existing technology in that the mobile switching centres in the networks of mobile systems cope with connections, etc., in order to provide as far as is possible access to the services that the user desires. However, these solutions create a heavy load, that is, they require a great deal of processor power in the subsystems, such as SSF in the GSM system, that are used during the connections. For example, in the case in which the GSM system is considered, problems are associated with users who are in roaming mode. In order to make possible connection of services in Internet-based networks, for example with the aid of the SIP protocol, the solution that is currently chosen is to assign to all users an IN category, which in this way makes it possible to start up the SSF functions in the mobile switching centre that manages connection to the service desired. This means, among other things, that roaming users cannot use the service, since this type of IN category cannot be transferred between the networks of different operators. Furthermore, this solution involves problems of the SSF functional unit often becoming overloaded and the problem that a user who is already in a situation in which an IN category has previously been assigned to him or her cannot use the service.

WO 00/56112 A1 discloses a method and a system for automatic profile generation between a first and a second network. Transmission of data between a GSM network and TDMA network is shown. When a mobile station of the first network is roaming within the second network, the mobile station initially requests registration of the mobile station to the visitor location register presently serving the mobile station. The request is forwarded to a mobility gateway between the first and second networks. In response to the request, user profile data is extracted from the home location register of the mobile station within the first network. The extracted information is converted into a form useable within the second network, and the newly created user profile is forwarded to the visitor location register of the second network which is presently serving the mobile station.

WO 99/23838 A1 discloses a telecommunications system and a method for routing a phone call when the switch serving the caller cannot access a database, where a Flexible Number Register, FNR, is used.

### DESCRIPTION OF THE INVENTION

The present invention aims to alleviate problems that are associated with the known technology in association with connection of services to a user terminal in a mobile communication network.

This is achieved by a method as defined in the enclosed claim 1 and a system according to the attached claim 5.

A method for control of signalling between a digital mobile communication system and a data communication network is revealed. A user terminal associated with the mobile communication system raises a request for information retrieval from a data terminal in the data communication network and the system carries out steps that comprise recognition of the request for information retrieval, direction of the request to a number retrieval database that exists in a switching centre of the mobile communication system, forwarding of the request to a conversion database, in which conversion of the request takes place according to an existing communication protocol for connection initiation that is present in the data communication network and forwarding the converted request to the data terminal. A reply from the data terminal is received, which is then subjected to a procedure for recognition whereby further management of the communication with the user terminal depends on the information that has been received with the reply from the data terminal.

The invention concerns a GSM system that comprises a mobile services switching centre that comprises a number of functional components with which one skilled in the art is fully familiar. The number retrieval database FNR has been implemented in such GSM systems and is a central part of the implementation of the invention. All connections in the system, both speech and non-speech connections, are connected with the aid of FNR, which forwards a request for connection to the HLR mobile services switching centre to which the receiving terminal/subscriber is connected.

The invention is based on the innovation of replacing, when connection to a service is required, the address that FNR uses in order to address the destination by an address of the service. This takes place by replacing the HLR address of the destination (the SCCP address) with an SCCP address of an SIP agent.

Such a solution means that the subscribers/users of a mobile operator can obtain access to services that are available in packet-switched networks that are connected with the aid of SIP, and that the users who are in roaming mode in the networks of other operators can also obtain this access to SIP-initiated services in packet-switched networks.

Examples of services that can be provided with the aid of connections that are carried out according to the invention are: call-blocking for incoming calls, call filtering, Freephone, number portability, call distribution, etc.

One advantage of the present invention is that services can be provided rapidly and flexibly to all subscribers in the network including those subscribers that temporarily roam in another network, since FNR is used instead of SSF for the connection.

A second advantage of the present invention is that the problem with the load on the SSF units disappears, and that conflicts on assignment of IN category can be avoided.

### BRIEF DESCRIPTION OF THE DRAWINGS

Figure 1 shows schematically a system according to the present invention.
Figure 2 shows schematically signalling between units according to a first embodiment of the invention.
Figure 3 shows schematically signalling between units according to a second embodiment of the invention.

### PREFERRED EMBODIMENTS

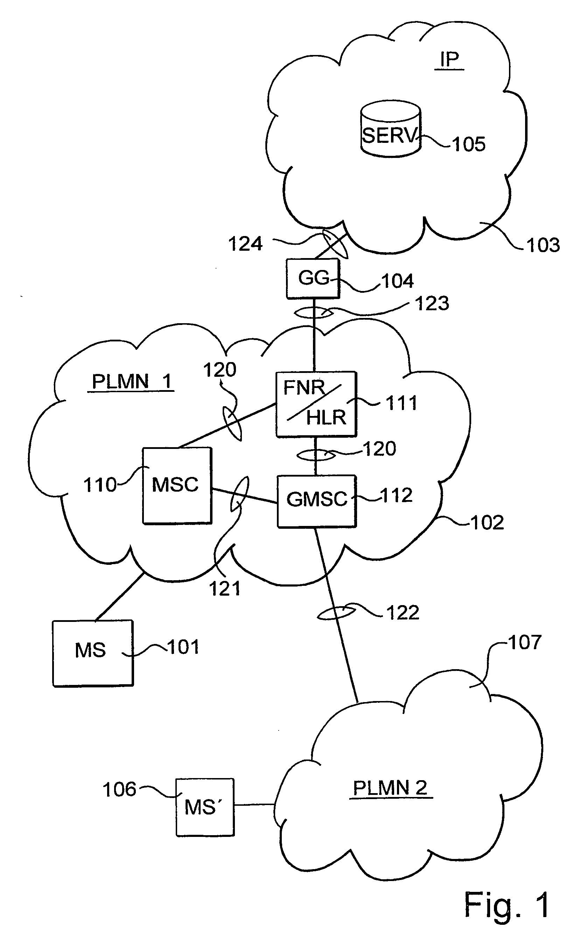

Figure 1 illustrates a system according to the invention in a manner familiar to one skilled in the art. A mobile terminal 101, which can be, for example, a telephone or another type of more or less intelligent terminal, is connected to a first mobile network 102 through a radio interface, etc., (not shown) according to known GSM technology. The functional units that are required for traffic between users, such as the mobile terminal 101, to work are present in the first mobile network 102. These units are: a mobile system switching centre 110, a mobile system switching centre with gateway function 112 and a home location register 111.

As is illustrated in Figure 1, the first mobile network 102 is connected to a second mobile network 107 to which a user 106 may be connected in the same way as to the first mobile network 102. A user 106 who has his or her home in the first mobile network 102 and visits the second mobile network 107, as is schematically illustrated in Figure 1, is then said to be in "roaming" mode.

The first mobile network 102 is connected to a data communication network 103 via a gateway functional unit 104. A number of parties that provide services are present in the data communication network 103, which, for example, may be a local network or a part of the Internet. These service providers are illustrated very schematically by a service server 105.

Communication with parties connected to the data communication network 103 takes place according to the IP protocol as is known to one skilled in the art, while communication within the mobile networks 102, 107 occurs according to GSM-specific protocols. Communication, comprising signalling, is illustrated in Figure 1 by round symbols between the various units. MAP communication 120 and ISUP communication 121 are used within the mobile networks 102, 107. Communication between the first mobile network 102 and the gateway function 104, and communication between the mobile networks 102, 107 also occur according to MAP 122, 123. Since the gateway function 104 communicates with an IP network, in the form of the data communication network 103, information is exchanged between the gateway function 104 and the data network 103 according to standard Internet protocols. Within the framework of this invention, communication takes place according to SIP 124.

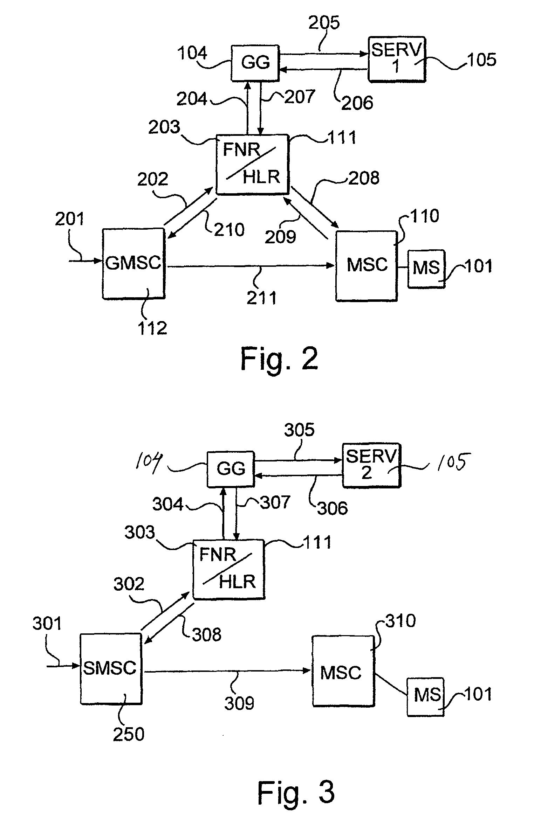

Figures 2 and 3 illustrate in a certain amount of detail signalling between the units that are shown in Figure 1.
Reference numbers in Figures 2 and 3 have the same significance as equivalent numbers in Figure 1. Figure 3 also shows a short message service centre (SMSC) 250.
Figure 2 shows how a call connection is established via an FNR/HLR home location register 111 and where a subscriber uses a service server in a data communication network that is connected to a mobile network. The signalling sequence can be illustrated with the aid of the following table:

| | |
|---|---|
| 201 | A request for the establishment of a connection with a subscriber arrives at the mobile switching centre with gateway function 112. The request is processed and results in a request to use the designated service, in this case a forwarding service. |
| 202 | MAP signalling takes place to the FNR with a request for forwarding information (Send Routing Information). |
| 203 | Number retrieval is carried out in the database FNR. |
| 204 | Following retrieval from the FNR, the MAP signal is forwarded to the database of the gateway functional unit to check that the requested service is available. |
| 205 | An SIP signal (SIP Invite) is carried out for the service server 105, if the requesting subscriber has access to the service. |
| 206 | The service server replies, after executing the requested service, with an SIP signal that points out the location at which the subscriber is connected in the network (SIP Temporarily Moved). |
| 207 | The MAP signal that shows the destination of the routing information is sent to the home location register 111. |
| 208 | The home location register 111 sends an SRI signal to the mobile switching centre 110 to which the receiving subscriber is connected and with which he/she is registered. |
| 209 | The mobile switching centre 110 to which the receiving subscriber is connected and with which he/she is registered sends back to the home location register a Roaming Number that points out the mobile switching centre 110. |
| 210 | The home location register 111 sends the roaming number back to the mobile switching centre with gateway function 112. |
| 211 | The connection is established via ISUP with the mobile switching centre 110 to which the receiving subscriber is connected and with which he/she is registered, with the aid of the roaming number, whereby the call arrives at the receiving subscriber. |

Figure 3 shows how a short message service (SMS) signal is established via an FNR/HLR home location register 111, and it shows how a subscriber uses a service server in a data communication network that is connected to a mobile network. The signalling sequence can be illustrated with the aid of the following table:

| | |
|---|---|
| 301 | A request for the establishment of a connection in the form of transfer of a short message to a subscriber arrives at the short message service centre 250. The request comprises a request to use a designated service, in this case a forwarding service. |
| 302 | MAP signalling takes place to the FNR with a request for the forwarding information for the short message, i.e. the signal SRI_for_SM. |
| 303 | Number retrieval is carried out in the database FNR. |
| 304 | Following retrieval from the FNR, the MAP signal is forwarded to the database of the gateway functional unit to check that the requested |
| | service is available. |
| 305 | An SIP signal (SIP Invite) is carried out for the service server 105, if the requesting subscriber has access to the service. |
| 306 | The service server replies, after executing the requested service, with an SIP signal that points out the location at which the subscriber is connected in the network (SIP Temporarily Moved). |
| 307 | The signal SRI_for_SM, which shows the destination of the routing information, is sent to the home location register 111. |
| 308 | The home location register 111 sends an SRI_for_SM signal for the short message back to the short message service centre (SMSC) 250. |
| 309 | The connection is established such that the short message can be sent via the signal forward_SM to the mobile switching centre 310 to which the receiving subscriber is connected and with which he/she is registered, whereby the receiving subscriber receives the short message. |

It is true that the invention has been exemplified in the embodiments described above using signalling in GSM systems with the use of specifically denoted GSM functions. This, however, must not be seen as a limitation. The invention can be applied in all systems, for example D-AMPS systems, in which equivalent functions are implemented.

## Claims

1. A method for control of signalling between a digital mobile communication system (102) and a packet-switched data communication network (103), where a user terminal (106) associated with the mobile communication system (102) raises a request (201, 301) for information retrieval from a data terminal (105) in the data communication network (103), comprising:
- recognition of the request for information retrieval,
- direction (202, 302) of the request to a number retrieval database (111) existing in a switching centre (110, 112, 250, 310) of the mobile communication system (102),
- forwarding (204, 304) of the request to a conversion database (104) in which conversion of the request takes place according to an existing communication protocol for connection initiation that is present in the data communication network (103),
- forwarding (205, 305) the converted request to the data terminal (105),
- reception (206, 306) of a reply from the data terminal (105),
- recognition of the reply received, further management of the communication with the user terminal (106) depending on the information that has been received with the reply from the data terminal (105), and the mobile communication system (102) is a GSM system, the communication protocol present in the data communication network (103) is SIP, the number retrieval database (111) is a Flexible Number Register, FNR, addressing in the FNR is carried out using SCCP addresses, and the request is addressed to the conversion database (104) in the form of its SCCP address.

2. A method according to claim 1, **characterized in that** the information retrieval is related to forwarding of a connection which the user terminal (106) intends to establish with a second user terminal (101) in a communication network.

3. A method according to claim 1 or 2, **characterized in that** the request for information retrieval is converted from a communication protocol which is present in the mobile communication system (102) to the communication protocol for connection initiation which exists in the data communication network (103).

4. A method according to any of the claims 1-3, **characterized in that** the communication protocol present in the mobile communication system (102) is MAP.

5. A system for control of signalling between a digital mobile communication system (102) and a packet-switched data communication network (103), whereby a user terminal (106) associated with the mobile communication system (102) raises a request (201, 301) for information retrieval from a data terminal (105) in the data communication network (103), the system comprising:
- means for recognition of the request for information retrieval,
- means for direction of the request to a number retrieval database (111) in a switching centre (110, 112, 250, 310) of the mobile communication system (102),
- means for forwarding of the request to a conversion database (104) in which conversion of the request takes place according to an existing communication protocol for connection initiation that is present in the data communication network (103),
- means for forwarding the converted request to the data terminal (105),
- means for reception of a reply from the data terminal (105),
- means for recognition of the reply received, further management of the communication with the user terminal (106) depending on the information that has been received with the reply from the data terminal (105), and the mobile communication system (102) is a GSM system, the communication protocol present in the data communication network (103) is SIP, and the number retrieval database (111) is a Flexible Number Register, FNR, which system for control of signalling is arranged to perform addressing in the FNR (111) using SCCP addresses and to address the request to the conversion database (104) in the form of its SCCP address.

6. A system according to claim 5, **characterised in that** the mobile communication system comprises means for managing the MAP communication protocol.

## Patentansprüche

1. Verfahren zum Steuern der Signalisierung zwischen einem digitalen mobilen Kommunikationssystem (102) und einem Paketvermittlungs-Datenkommunikationsnetz (103), wo ein Benutzerendgerät (106), das mit dem mobilen Kommunikationssystem (102) verknüpft ist, eine Anforderung (201, 301) zur Informationsgewinnung von einem Datenendgerät (105) in dem Datenkommunikationsnetz (103) macht, das aufweist:
- Erkennen der Anforderung für Informationsgewinnung,
- Richten (202, 302) der Anforderung zu einer zum Erhalten von Nummern ausgebildeten Datenbank (111), die in einem Vermittlungszentrum (110, 112, 250, 310) des mobilen Kommunikationssystems (102) existiert,
- Senden (204, 304) der Anforderung an eine Umwandlungsdatenbank (104), in der die Umwandlung der Anforderung gemäß einem existierenden Kommunikationsprotokoll, das in dem Datenkommunikationsnetz (103) vorhanden ist, für die Einleitung von Verbindung stattfindet,
- Senden (205, 305) der umgewandelten Anforderung an das Datenendgerät (105),
- Empfangen (206, 306) einer Antwort von dem Datenendgerät (105),
- Erkennen der empfangenen Antwort, weiter Verwaltung der Kommunikation mit dem Benutzerendgerät (106) in Abhängigkeit von der Information, die mit der Antwort von dem Datenendgerät (105) erhalten wurde, und das mobile Kommunikationssystem (102) ist ein GSM-System, das in dem Datenkommunikationsnetz (103) enthaltene Kommunikationsprotokoll ist SIP, die zum Erhalten von Nummern ausgebildete Datenbank (111) ist ein Flexibles Nummern-Register, FNR, Adressierung in dem FNR wird unter Verwendung von SCCP-Adressen durchgeführt, und die Anforderung wird an die Umwandlungsdatenbank (104) in Form ihrer SCCP-Adresse adressiert.

2. Verfahren nach Anspruch 1, **dadurch gekennzeichnet, dass** die Informationsgewinnung zusammenhängt mit Weiterleitung einer Verbindung, die das Benutzerendgerät (106) mit einem zweiten Benutzerendgerät (101) in einem Kommunikationsnetz einzurichten beabsichtigt.

3. Verfahren nach Anspruch 1 oder 2, **dadurch gekennzeichnet, dass** die Anforderung für Informationsgewinnung von einem Kommunikationsprotokoll, das in dem mobilen Kommunikationssystem (102) vorhanden ist, in ein Kommunikationsprotokoll für Einleitung von Verbindung umgewandelt wird, das in dem Datenkommunikationsnetz (103) existiert.

4. Verfahren nach einem der Ansprüche 1 bis 3, **dadurch gekennzeichnet, dass** das Kommunikationsprotokoll, das im mobilen Kommunikationssystem (102) vorhanden ist, MAP ist.

5. System zum Steuern der Signalisierung zwischen einem digitalen mobilen Kommunikationssystem (102) und einem Paketvermittlungs-Datenkommunikationsnetz (103), wobei ein Benutzerendgerät (106), das mit dem mobilen Kommunikationssystem (102) verknüpft ist, eine Anforderung (201, 301) zum Gewinnen von Information von einem Datenendgerät (105) in dem Datenkommunikationsnetz (103) macht, welches System aufweist:
- Mittel zum Erkennen der Anforderung zum Gewinnen von Information,
- Mittel, um die Anforderung zu einer zum Erhalten von Nummern ausgebildeten Datenbank (111)in einem Vermittlungszentrum (11, 112, 250, 310) des mobilen Kommunikationssystems (102) zu richten,
- Mittel zum Weiterleiten der Anforderung zu einer Umwandlungsdatenbank (104), in der Umwandlung der Anforderung gemäß einem existierenden Kommunikationsprotokoll, das in dem Kommunikationsnetz (103) vorhanden ist, für die Einleitung von Verbindung stattfindet, ,
- Mittel zum Weiterleiten der umgewandelten Anforderung an das Datenendgerät (105),
- Mittel zum Empfangen einer Antwort von dem Datenendgerät (105),
- Mittel zum Erkennen der empfangenen Antwort, weiter Verwaltung der Kommunikation mit dem Benutzerendgerät (106) in Abhängigkeit von der Information, die mit der Antwort von dem Datenendgerät (105) erhalten ist, und das mobile Kommunikationssystem (102) ist ein GSM-System, das in dem Datenkommunikationsnetz (103) enthaltene Kommunikationsprotokoll ist SIP, und die zum Erhalten von Nummern ausgebildete Datenbank (111) ist ein Flexibles Nummern-Register FNR, welches System zum Steuern der Signalisierung so ausgebildet ist, Adressierung in dem FNR (111) unter Verwendung von SCCP-Adressen durchzuführen und die Anforderung zur Umwandlungsdatenbank (104) in der Form ihrer SCCP-Adresse zu adressieren.

6. System nach Anspruch 5, **dadurch gekennzeichnet, dass** das mobile Kommunikationssystem Mittel zum Verwalten des MAP-Kommunikationsprotokolls aufweist.

## Revendications

1. Procédé de commande de signalisation entre un système de communication mobile numérique (102) et un réseau de communication de données commuté par paquets (103), dans lequel un terminal d'utilisateur (106) associé au système de communication mobile (102) formule une requête (201, 301) afin de rechercher et d'extraire des informations à partir d'un terminal numérique (105) sur le réseau de communication de données (103), comprenant :
l'identification de la requête de recherche d'information,
l'acheminement (202, 302) de la requête vers une base de données d'extraction de numéro (111) existant sur un centre de commutation (110, 112, 250, 310) du système de communication mobile (102),
la transmission (204, 304) de la requête vers une base de données de conversion (104) dans laquelle la conversion de la requête est réalisée selon un protocole de communication existant, destiné à assurer l'initiation d'une connexion, qui est présent sur le réseau de communication de données (103),
la transmission (205, 305) de la requête convertie au terminal numérique (105),
la réception (206, 306) d'une réponse à partir du terminal numérique (105),
l'identification de la réponse reçue, une prise en charge complémentaire de la communication avec le terminal d'utilisateur (106) dépendant des informations qui ont été reçues avec la réponse à partir du terminal numérique (105), et le système de communication mobile (102) est un système GSM, le protocole de communication présent sur le réseau de communication de données (103) est le protocole SIP, la base de données d'extraction de numéro (111) est un registre de numéro flexible, FNR, l'adressage dans le FNR est mis en oeuvre en utilisant des adresses SCCP, et la requête est adressée à la base de données de conversion (104) sous la forme de son adresse SCCP.

2. Procédé selon la revendication 1, **caractérisé en ce que** l'extraction d'informations est associée à la transmission d'une connexion que le terminal d'utilisateur (106) essaye d'établir avec un second terminal d'utilisateur (101) dans un réseau de communication.

3. Procédé selon la revendication 1 ou 2, **caractérisé en ce que** la requête d'extraction d'informations est convertie à partir d'un protocole de communication qui est présent sur le système de communication mobile (102) pour le protocole de communication destiné à assurer l'initiation d'une connexion qui existe sur le réseau de communication de données (103).

4. Procédé selon l'une quelconque des revendications 1 à 3, **caractérisé en ce que** le protocole de communication présent sur le système de communication mobile (102) est le protocole MAP.

5. Système de commande de signalisation entre un système de communication mobile numérique (102) et un réseau de communication de données commuté par paquets (103), de telle sorte qu'un terminal d'utilisateur (106) associé au système de communication mobile (102) formule une requête (201, 301) afin de rechercher et d'extraire des informations à partir d'un terminal numérique (105) sur le réseau de communication de données (103), le système comprenant :
des moyens d'identification de la requête d'extraction d'information,
des moyens d'acheminement de la requête vers une base de données d'extraction de numéro (111) dans un centre de commutation (110, 112, 250, 310) du système de communication mobile (102),
des moyens destinés à transmettre la requête vers une base de données de conversion (104) dans laquelle la conversion de la requête est réalisée selon un protocole de communication existant, destiné à assurer l'initiation d'une connexion, qui est présent sur le réseau de communication de données (103),
des moyens de transmission de la requête convertie au terminal numérique (105),
des moyens de réception d'une réponse à partir du terminal numérique (105),
des moyens d'identification de la réponse reçue, la prise e e n charge complémentaire de la communication avec le terminal d'utilisateur (106) dépendant des informations qui ont été reçues avec la réponse à partir du terminal numérique (105), et le système de communication mobile (102) est un système GSM, le protocole de communication présent sur le réseau de communication de données (103) est le protocole SIP, et la base de données d'extraction de numéro (111) est un registre de numéro flexible, FNR, lequel système de commande de signalisation est agencé de manière à exécuter un adressage dans le registre FNR (111) en utilisant des adresses SCCP et à adresser la requête vers la base de données de conversion (104) sous la forme de son adresse SCCP.

6. Système selon la revendication 5, **caractérisé en ce que** le système de communication mobile comprend des moyens de prise en charge du protocole de communication MAP.
